# EUROPEAN PATENT APPLICATION

(11) **EP 0 660 319 A2**
(43) Date of publication of application: **28.06.1995**
(21) Application number: 94309776.6
(22) Date of filing: 23.12.1994
(51) Int. Cl.: G11B 17/028

(54) **Disc clamping apparatus**

(30) Priority: 24.12.1993 JP 328911/93
(71) Applicant: KABUSHIKI KAISHA TOSHIBA, Kawasaki-shi, Kanagawa-ken 210 (JP)
(72) Inventor: Kurafuji, Takamasa, c/o Intellectual Property Div., Tokyo (JP); Tomita, Seiji, c/o Intellectual Property Div., Tokyo (JP); Imaoka, Yoshiharu, c/o Intellectual Property Div., Tokyo (JP)
(74) Representative: O'Connell, David Christopher

(57) **Abstract**

A disc clamping apparatus provided with a disc turntable (1) having a plurality of concentric clamping portions (1b, 1c) which correspond with dimensionally different clamping areas (AC1, AC2) of different standard discs.

## Description

The present invention relates to a disc clamping apparatus, and more particularly, to a disc clamping apparatus in which different types of disc, such as magnetic discs, optical discs, and such like are able to be interchangeably clamped.

One prior art disc clamping apparatus, such as that shown in Japanese laid open patent application number 5-128776, which is incorporated herein by reference, discloses a conventional disc clamping apparatus on which optical discs, magneto-optic discs and magnetic discs (hereinafter these discs will be generally referred to as "disc") can be interchangeably clamped. In this prior art, the interchangeability is retained by providing a chuck hub on the optical disc so that the optical disc can be held on the clamping apparatus mainly designed for different types of disc.

Many different discs have become available recently, such as a compact disc (hereinafter referred to as CD) and a multi-media optical disc (hereinafter referred to as MMD).

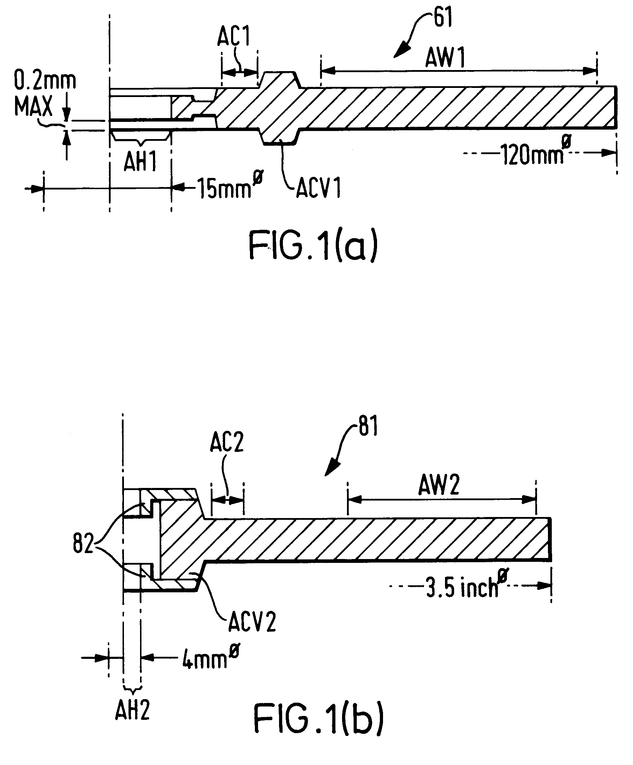

Referring now to Figures 1(a) and 1(b), dimensional standards of the CD (see Figure 1(a)) and the MMD (see Figure 1(b)) will be explained hereinafter.

As shown in Figure 1(a), the CD has an outer diameter of 120 mm. The CD is further defined by a record area AW1, a protrusion ACV1, a clamping area AC1 and a center hole AH1 positioned sequentially in an inwards direction. The clamping area AC1 is provided at a position lying between 26 mm and 33 mm diameter, while the center hole AH1 has a diameter of 15 mm.

As shown in Figure 1(b), the MMD has an outer diameter of 3.5 inch. The MMD is further defined by a record area AW2, a clamping area AC2, a protrusion ACV2 and a center hole AH2, positioned sequentially in an inwards direction. The clamping area AW2 is provided at a position lying between 16 mm and 21 mm diameter while the center hole AH2 has a diameter of 4 mm. Further, metal hubs 82 are provided on both sides of the protrusion ACV2, slightly extending over the center hole AH2, thus restricting the 4 mm diameter of the center hole AH2.

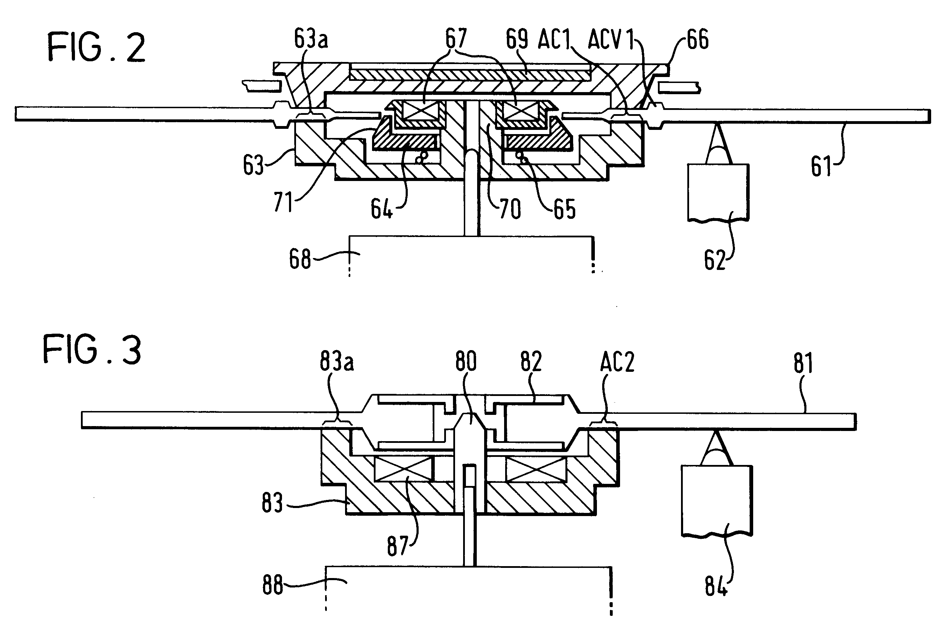

Figure 2 shows a dedicated clamping apparatus for the CD 61. The clamping apparatus is comprised of a disc turntable 63, a motor 68 for driving the disc turntable 63 through a drive shaft, and a magnetically attractive metal plate 69. The disc turntable 63 contains inside thereof a center-ring 64, a coil spring 65 for biasing the center-ring 64 and a magnet 67 installed on a bearing 70 of the motor 68 for attracting the magnetically attractive metal plate 69. An optical pickup is movably provided near the information bearing surface of the CD 61.

A clamping portion 63a of the disc turntable 63 abuts the clamping area AC1 of the CD 61, as shown in Figure 2. The center hole AH (see Figure 1(a)) of the CD 61 is located by abutting the upper slope of the center-ring 64, then being pressed downward by the holder 66. At this time, the magnet 67 installed in the disc turntable 63 attracts the metal plate 69 mounted on the disc holder 66. In this way, the CD 61 can be clamped by the clamping apparatus.

Figure 3 shows a dedicated clamping apparatus for the MMD 81. This type of clamping apparatus is comprised of a center spindle 80 installed on a drive shaft of a motor 88 and a disc turntable 83 containing a magnet 87 in its inside. An optical pickup 84 is movably provided near the information bearing surface of the MMD 81.

A clamping portion 83a of a disc turntable 83 abuts the clamping area AC2 of the MMD 81 having metal hubs 82 as shown in Figure 3. The center hole AH2 (see Figure 1(b)) of the MMD 82 is located by the center spindle 80. At this time the magnet 87 mounted on a disc turntable 83 attracts the metal hub 82. In this way, the MMD 81 is secured on the disc turntable 83.

As described above, it has previously been necessary to provide a dedicated clamping apparatus designed in accordance with every specific standard of the disc, i.e., the dimensions of the clamping area, presence or absence of metal hubs and other such features.

The present invention seeks to provide a disc clamping apparatus which can be used for various disc with different specifications.

According to the invention, there is provided a disc clamping apparatus adapted for clamping one of a set comprising a plurality of standard discs having different specified clamping areas, comprising:
a disc turntable having a plurality of concentric clamping portions which correspond with dimensionally different clamping areas of the plurality of differently sized discs included in the set.

According to the invention, since concentric clamping portions are provided on the disc turntable different types of discs with dimensionally different clamping areas can be interchangeably clamped on the disc turntable.

A magnet may be mounted on the disc turntable for attracting the metal member, enabling the clamping apparatus firmly to hold the disc in the clamping operation.

A plurality of the concentric clamping portions defined on the disc turntable may have a height difference therebetween and therefore it is possible to clamp a variety of discs having different shapes of central portions, such as a CD and a MMD.

An outer-ring for supporting the first type of disc and an inner-ring for supporting the second type of disc may be provided as the concentric clamping portions and a center-ring provided with a magnet may be constructed to freely move in the direction perpendicularly away from the disc turntable. Thus it is possible to securely clamp the first and the second type of discs whose clamping areas and outer shapes are dimensionally different from each other.

The center-ring may fit into the center hole of the first type of disc, and the clamping apparatus may be arranged so that when the first type of disc is supported the center-ring is received in the depression of the inner-ring, and when the second disc is supported the metal hub provided on the second type of disc is attracted to the magnet held in the center-ring, and further that the center spindle penetrates through the center hole of the second type of disc, thus resulting in a secure clamp of different types of discs.

The first type of disc may be a compact disc (CD), and the second type of disc may be a multi-media optical disc (MMD). As it is possible to drive discs in different recording forms in the same disc clamping apparatus, the usability of the clamping apparatus is improved.

Additional objects and advantages of the present invention will be apparent to persons skilled in the art from a study of the following description and the accompanying drawings, which are hereby incorporated in and constitute a part of this specification.

For a better understanding of the present invention and to show how it may be brought into effect, reference will now be made, by way of example, to the accompanying drawings, wherein:
Figures 1(a) and 1(b) are cross sectional diagrams showing the construction of a CD and a MMD respectively;
Figure 2 is a cross sectional diagram showing a known disc turntable and disc holder having a CD loaded on the disc turntable;
Figure 3 is a cross sectional diagram showing a known disc turntable and disc holder having a MMD loaded on the disc turntable;
Figure 4 is a vertical sectional view showing a disc turntable and the construction of a preferred embodiment of the disc apparatus according to the present invention;
Figure 5 is a cross sectional view of the disc turntable and the disc holder of Figure 4 when an MMD is loaded on the disc turntable; and
Figure 6 is a cross sectional view of the disc turntable and the disc holder of Figure 4 when a CD is loaded on the disc turntable.

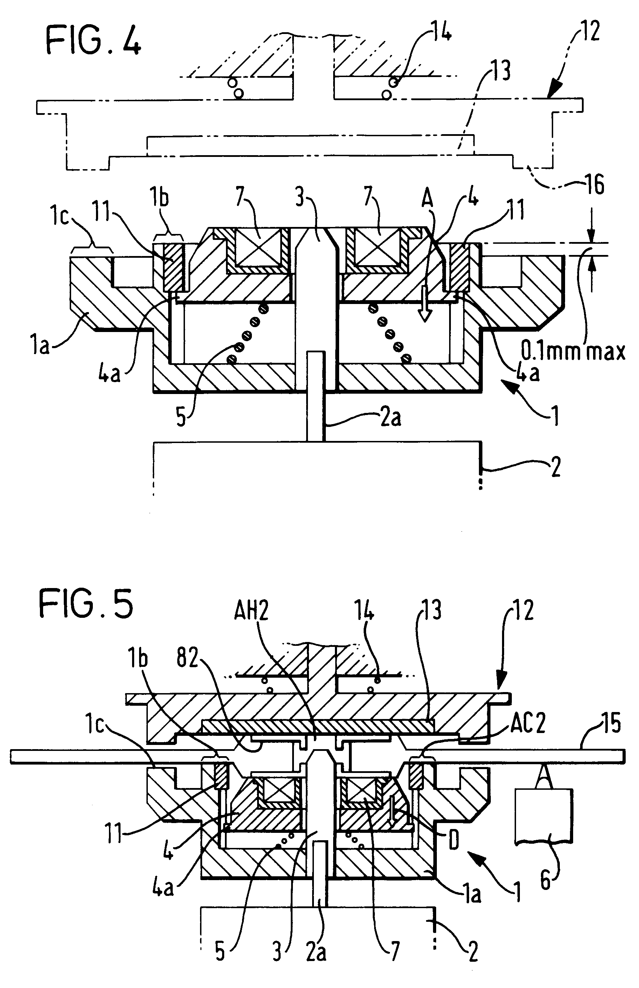

The present invention will be described in detail with reference to the Figures 4 through 6. Throughout the drawings, like or equivalent reference numerals or letters will be used to designate like or equivalent elements for simplicity of explanation.

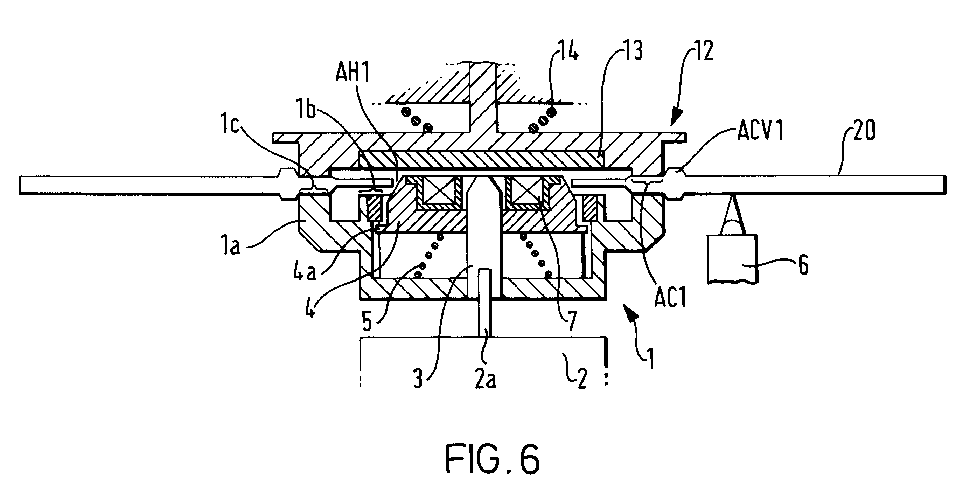

Figure 4 is a vertical sectional view showing the disc turntable and its internal structure in the disc clamping apparatus according to one embodiment of the present invention. Figure 5 is a cross sectional view of the disc turntable and the disc holder when an MMD is loaded on the disc turntable. Figure 6 is a cross sectional view of the disc turntable and the disc holder when the CD is loaded on the disc turntable.

In Figure 4 the disc turntable 1 includes mainly a disc turntable main body 1a; a center spindle 3 having a drive shaft 2a for transmitting the rotary force of motor 2 thereto; a center-ring 4; and a spring 5 biasing the center-ring 4 upward.

The disc turntable main body 1a is formed by a bottoming cylinder shaped inner circle 1b, an outer circle 1c, and a fixed width groove defined between the circles 1b and 1c. The inner circle 1b and the outer circle 1c are concentric on the disc turntable main body 1a. Thus they form a clamping area for clamping different types of disc. Further the upper surface of the inner circle 1b and the upper surface of the outer circle 1c are formed so as to differ in height, e.g. a difference of 0.1 mm (max), as shown in Figure 4.

Further, an engagement part 11 is defined on the open edge of the inner wall of the inner circle 1b. In the inner circle 1b, a magnet 7 is installed uppermost, as shown in the diagram, together with a center-ring 4 movable in the axial direction along the center spindle, and a spring 5 biasing the center-ring 4 upward. Accordingly the center-ring 4 is movable in the downward direction (as indicated by an arrow A) of the disc turntable main body 1a by the force of the spring 5.

A maximum allowable distance of center-ring 4 in the direction toward the open edge of the disc turntable main body 1a (opposite the direction indicated by arrow A) is decided by the engagement of the engagement part 11 formed on the opening edge of the inner wall of the inner circle 1b and the protrusion 4a forming the lower portion of the center-ring 4.

Further, the disc holder 12 comes down to cover the upper surface of a disc turntable 1 (i.e., to the upper surface of the center-ring), on which the disc is loaded, then clamps the disc in co-operation with the disc turntable 1. To achieve this, the disc holder 12 is rotatably installed in a lid portion, while a magnetically attractive metal plate 13 is defined at the center of its lower surface as shown in the diagram. Further a projection 16 is formed facing the outer circle 1c of the disc turntable main body 1a. Further, a spring 14 is arranged between the lid portion and the disc holder 12, which spring presses the disc holder 12 downward to resiliently hold it there.

Referring now to Figures 5 and 6, an operation of the disc clamping apparatus will be explained.

Figure 5 shows the MMD 15 held between the disc turntable 1 and the disc holder 12. This will be explained in detail hereinafter.

First, the MMD 15 is loaded on the center-ring 4. At this time, the MMD 15 is so positioned that the center spindle 3 fits in the center hole AH2 of the MMD 15. Then MMD 15 is clamped by pressing the disc holder 12 on the MMD 15 downwardly.

Accordingly, the upper side of the protrusion ACV2 or the metal hub 82 of the MMD 15 faces the magnetically attractive metal plate 13 of the disc holder 12, while the other side fits the magnet 7 embedded in the center-ring 4. Then, due to the attraction of the magnet 7 and the magnetically attractive metal plate 13 and the metal hub 82, the MMD 15 is firmly secured on the disc turntable 1 clamped between the disc turntable 1 and the disc holder 12. At this same time the clamping area AC2 of the MMD 15 fits the inner circle 1b. As a result, the metal hub 82 is firmly fixed on the center spindle 3 and rotates without a slippage therebetween. An optical pickup 6 is movably located near the information bearing surface of the MMD 15.

Figure 6 shows a CD 20 held between the disc turntable 1 and the disc holder 12. This will be explained in detail hereinafter.

First, the CD 20 is loaded on the center-ring 4. That is, the upper portion of the center-ring 4 of the disc turntable 1 fits in the center hole AH1 of the CD 20, while the innermost edge, i.e., the hole AH1 of the CD 20 is placed on the upper inclined portion of the center-ring 4. At this time, the magnetically attractive metal plate 13 of the disc holder 12 and the magnet 7 of the center-ring 4 attract each other. Then the clamping area AC1 of the CD 20 is firmly clamped between the projection 16 of the disc holder 12 and the outer circle 1c of the disc turntable 1 so that the CD 20 is fixed on the disc turntable 1. An optical pickup 6 is used for recording and/or reproducing the CD 20.

In the above embodiment, while CDs and MMDs are exemplarily described as the disc, the present invention can be applied for other standards of discs, such as 120 mm digital video discs, discs absent of metal portions, discs with differently sized clamp areas and such like.

As described above, the present invention can provide an extremely preferable disc clamping apparatus which is versatile for a variety of discs, so it need not be equipped with a plurality of dedicated clamping apparatus for every standard of disc.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and could be defined by claims differing in scope from the following claims, which different claims may be adopted subsequently during prosecution, for example, for the purposes of a divisional application.

## Claims

1. A disc clamping apparatus adapted for clamping one of a set comprising a plurality of standard discs (15, 20) having different specified clamping areas, comprising:
a disc turntable (1) having a plurality of concentric clamping portions (1b, 1c) which correspond with dimensionally different clamping areas (AC1, AC2) of the plurality of differently sized discs (15, 20) included in the set.

2. A disc clamping apparatus as claimed in claim 1 wherein the disc turntable (1) also has a magnetic member (7) wherein the disc clamping apparatus (1) also comprises a disc holder (12) having a magnetically attractive member (13) associated with the magnetic member (7) of the disc turntable so that, in use, the discs (15, 20) are secured therebetween.

3. A disc clamping apparatus as claimed in claim 2 further comprising a center-ring (4) and a resilient member (5) for applying a biasing force in the axial direction of the disc, wherein the magnetic member (7) is held on the center-ring (4) via the resilient member (5).

4. A disc clamping apparatus as claimed in any preceding claim, wherein the plurality of clamping portions (1b, 1c) are of different height in the axial direction of the disc.

5. A disc clamping apparatus as claimed in any preceding claim wherein the disc turntable (1) has a center spindle (3) which receives the drive force of a motor;
the disc clamping apparatus also having a center-ring (4) mounted in a depression defined in the disc turntable (1), the center-ring (4) being both rotatable about the center spindle (3) and axially slidable along the center spindle (3);
a spring (5) for biasing the center-ring in the direction away from the disc turntable (1); and
a stopper (11, 4a) for engaging the outer edge of the center-ring with the inner wall of the depression of the disc turntable (1) to cause the center-ring (4) to be integrally rotated with the disc turntable (1) and for restricting the center-ring (4) at a prescribed axial position along the center spindle further away from the disc turntable.

6. A disc clamping apparatus as claimed in claim 5, wherein a prescribed portion of the center-ring (4) capable of protruding out from the depression has a taper to fit in the center hole of at least a first type of disc.

7. A disc clamping apparatus as claimed in claim 6, in which the clamping portions comprise at least an outer-ring (1c) provided on the upper surface of the turntable (1) for supporting a first type of disc (20), wherein when a first type of disc (20) is coaxially supported on the outer-ring (1c), the taper portion of the center-ring is biased by the spring (5) and projects out from the depression so as to come into the center hole (AH1) of the first type of disc (20).

8. A disc clamping apparatus as claimed in one of claims 5, 6 or 7, in which the clamping portions comprise at least an inner-ring (1b) provided on the upper surface of the turntable for supporting a second type of disc (15), wherein when a second type of disc (15) is coaxially supported on the inner-ring (1b) the center-ring (4) is received in the depression by the attraction between the magnet (7) and a metal hub (82) provided on the second type of disc (15) in opposition to the spring (5) so as to pass the center spindle (3) through the center hole (AH2) of the second type of disc.

9. A disc clamping apparatus of claim 7 or 8, wherein a first type of disc (20) is a compact disc (CD) and a second type of disc (15) is a multi-media optical disc.

10. A disc clamping apparatus, comprising:
a disc turntable having a plurality of concentric clamping portions which correspond with dimensionally different clamping areas of different standard discs.
